# EUROPEAN PATENT APPLICATION

(11) **EP 4 741 198 A1**
(43) Date of publication of application: **13.05.2026**
(21) Application number: 24850823.6
(22) Date of filing: 26.07.2024
(51) Int. Cl.: B60K 1/04, B62D 25/20

(54) **BATTERY PACK CASE, CELL TO BODY AND ELECTRIC VEHICLE**

(30) Priority: 07.08.2023 CN 202310989995
(71) Applicant: Shenzhen Yinwang Intelligent Technologies Co., Ltd., Shenzhen, Guangdong 518110 (CN)
(72) Inventor: PAN, Zhihong, Shenzhen, Guangdong 518129 (CN); HE, Yande, Shenzhen, Guangdong 518129 (CN); XU, Chengmin, Shenzhen, Guangdong 518129 (CN); LI, Jingjing, Shenzhen, Guangdong 518129 (CN); LENG, Yuanyuan, Shenzhen, Guangdong 518129 (CN)
(74) Representative: Maiwald GmbH
(86) International application number: PCT/CN2024/107935
(87) International publication number: WO 2025/031174

(57) **Abstract**

Provided are a battery pack box (10), a cell-integrated vehicle body, and an electric vehicle. The battery pack box (10) includes a housing (1), an upper cover (2), and a reinforcing structure (3). The housing (1) includes a bottom shell (11) and an enclosing frame (12), and the enclosing frame (12) is fastened to the bottom shell (11) and protrudes from the bottom shell (11) to form space for accommodating cells (30). The reinforcing structure (3) includes at least one longitudinal beam (31) and a plurality of transverse beam brackets (321). Each longitudinal beam (31) is fastened to the enclosing frame (12) in a length direction of the electric vehicle. Any one of the transverse beam brackets (321) is fastened between one longitudinal beam (31) and the enclosing frame (12) or between any two adjacent longitudinal beams (31) in a width direction of the electric vehicle. The transverse beam brackets (321) are arched and protrude away from the bottom shell (11). The upper cover (2) is sealingly fastened on a top that is of the enclosing frame (12) and that faces away from the bottom shell (11), the upper cover (2) is fixedly connected to the transverse beam brackets (321), and the upper cover (2) is configured to form at least a part of a floor of the frame (20).

## Description

### CROSS-REFERENCE TO RELATED APPLICATIONS

This application claims priority to Chinese Patent Application No. 202310989995.8, filed with the China National Intellectual Property Administration on August 7, 2023 and entitled "BATTERY PACK BOX, CELL-INTEGRATED VEHICLE BODY, AND ELECTRIC VEHICLE", which is incorporated herein by reference in its entirety.

### TECHNICAL FIELD

This application relates to the field of automobile technologies, and in particular, to a battery pack box, a cell-integrated vehicle body, and an electric vehicle.

### BACKGROUND

With the continuous development of new-energy vehicles, a manner of integrating a battery into an electric vehicle is also continuously improved. Cell to body (cell to body, CTB) is a new technology for battery-body integration. Specifically, in the cell-to-body technology, an upper cover of a battery pack and a floor of a vehicle body can be integrated together to form one structure, so that battery integration and structure integration can be further implemented.

In the conventional technology, a common cell-to-body solution is to use a sheet metal bottom plate of a body in white as an upper cover of a blade battery. The blade battery can be used as a structural member to bear a stepping force from a passenger, without affecting a side electrode tab, and therefore no failure, for example, a short circuit at a high voltage, is caused. However, this solution is applicable to only blade batteries. For a cell-to-body solution for a prismatic battery, balancing battery sealing and stepping stiffness is a current technical difficulty.

### SUMMARY

Embodiments of this application provide a battery pack box, a cell-integrated vehicle body, and an electric vehicle. The battery pack box can be integrated with a frame. A top portion of the battery pack box can form at least a part of a bottom plate of the frame and provide sufficient stepping stiffness, meeting a strength requirement of the frame.

According to a first aspect, a battery pack box is provided. The battery pack box may be configured to be integrated with a frame of an electric vehicle, to implement integration of cells and the frame. The battery pack box includes a housing, an upper cover, and a reinforcing structure. The housing includes a bottom shell and an enclosing frame. The enclosing frame is fastened to the bottom shell and protrudes from the bottom shell to form space for accommodating cells. The enclosing frame and the bottom shell may be in a shape of an open case, which helps accommodate the cells. The reinforcing structure is fastened to the enclosing frame to increase strength of the housing. The reinforcing structure includes at least one longitudinal beam and a plurality of transverse beam brackets. Each longitudinal beam is fastened to the enclosing frame in a length direction of the electric vehicle. The longitudinal beam can provide support in the length direction of the electric vehicle. Any one of the transverse beam brackets is fastened between one longitudinal beam and the enclosing frame or between any two adjacent longitudinal beams in a width direction of the electric vehicle. The transverse beam bracket can provide support in the width direction of the electric vehicle. Specifically, the transverse beam bracket is in two possible connection states: one is that the transverse beam bracket is connected between the enclosing frame and one longitudinal beam, and the other is that the transverse beam bracket is connected between two longitudinal beams when there are at least two longitudinal beams. In the width direction of the electric vehicle, the transverse beam brackets are arched and protrude away from the bottom shell. The transverse beam bracket, when receiving a force, can transfer the force to two lower ends and then to the longitudinal beam and the enclosing frame, thereby increasing a support force. The upper cover is sealingly fastened on a top that is of the enclosing frame and that faces away from the bottom shell, the upper cover is fixedly connected to the transverse beam brackets, and the upper cover is configured to form at least a part of a floor of the frame.

The upper cover of the battery pack box provided in this application can be used as the floor of the frame. The reinforcing structure fastened to the enclosing frame has sufficient structural strength, so that a load-bearing capability of the housing can be improved. In this case, the upper cover has sufficient stepping stiffness, meeting a strength requirement of the floor of the frame. The integration of the battery pack box and the frame can free up space that is originally for a multi-layer structure between the battery pack and the floor, and can improve volume utilization of a battery system, so that more batteries can be placed in the same space. In addition, the sealed connection between the upper cover and the housing of the battery pack box can ensure safety of the battery pack.

In a possible implementation, in the width direction of the electric vehicle, the transverse beam bracket includes at least one bent structure, and the bent structure protrudes away from the bottom shell. For the entire transverse beam bracket, in the presence of the bent structure, a certain compressive stress and a certain tensile stress are formed inside the transverse beam bracket when the transverse beam bracket receives a force, so that the external force can be partially counteracted, thereby increasing strength.

To help connect and fix the upper cover, the bent structure includes a support surface parallel to the bottom shell, and the upper cover is at least partially fastened to the support surface. A surface contact connection can be implemented between the support surface and the upper cover, increasing a contact area and improving support effect.

In a possible implementation, at least two bent structures are arranged in the length direction of the electric vehicle, so that at least two support surfaces are formed on the transverse beam bracket along the length of the electric vehicle, and the support surfaces are coplanar, increasing a support force. The at least two bent structures are spaced apart, so that a plurality of nodes at bends can be formed on the transverse beam bracket, further increasing a support force.

In a possible implementation, the battery pack box is provided with a plurality of transverse beam assemblies in the length direction of the electric vehicle. The transverse beam assemblies each include a plurality of transverse beam brackets, and the plurality of transverse beam brackets are sequentially arranged from head to tail in the width direction of the electric vehicle. The plurality of transverse beam brackets are regularly arranged from head to tail in the width direction of the electric vehicle, so that a support force in the width direction of the electric vehicle can be formed. During specific implementation, a plurality of transverse beam assemblies may be disposed in the length direction of the electric vehicle based on a structural layout of the electric vehicle, to increase support strength of the housing.

Possibly, all the transverse beam brackets have a same size in the width direction of the electric vehicle. Two ends of the transverse beam bracket are either connected to one longitudinal beam and the enclosing frame, or connected to two adjacent longitudinal beams. In this case, it may be considered that the longitudinal beam divides the enclosing frame equally into a plurality of regions in the width direction of the electric vehicle, and a width of each region matches a width of the transverse beam bracket, so that the housing has a balanced support force in the width direction of the electric vehicle.

According to a second aspect, a cell-integrated vehicle body is provided. The cell-integrated vehicle body includes a frame, cells, and any battery pack box provided according to the first aspect. The frame includes a front segment, a rear segment, and two threshold beams connected between the front segment and the rear segment, the front segment and the rear segment are fastened respectively at two ends of the enclosing frame in the length direction of the electric vehicle, the two threshold beams are fastened respectively at two ends of the enclosing frame in the width direction of the electric vehicle, and the upper cover forms at least a part of a floor of the frame. The cells are accommodated between the housing and the upper cover, and the upper cover is sealingly connected to the housing, so that safety of the battery pack can be ensured. The battery pack box and the frame are integrated together in the cell-integrated vehicle body, which is equivalent to integrating the cells and the frame. The structure of the battery pack box has sufficient stepping stiffness, so that the upper cover of the battery pack box can form at least a part of the floor of the frame, meeting a strength requirement of the bottom plate of the frame.

In a possible implementation, the battery pack box is provided with a plurality of transverse beam assemblies in the length direction of the electric vehicle. Each transverse beam assembly includes a plurality of transverse beam brackets. The plurality of transverse beam brackets are sequentially arranged from head to tail in the width direction of the electric vehicle, so that a support force in the width direction of the electric vehicle can be formed. During specific implementation, a plurality of transverse beam assemblies may be disposed in the length direction of the electric vehicle based on a structural layout of the electric vehicle, to increase support strength of the housing.

In a possible implementation, in the length direction of the electric vehicle, the plurality of transverse beam assemblies are grouped into three sets, each set of transverse beam assemblies includes at least one transverse beam assembly, and the three sets of transverse beam assemblies are spaced apart in the length direction of the electric vehicle. The three sets of transverse beam assemblies include a first set of transverse beam assemblies, a second set of transverse beam assemblies, and a third set of transverse beam assemblies. Based on the structure of the frame, the first set of transverse beam assemblies is disposed between two transverse beams of front-row seats of the frame. The second set of transverse beam assemblies is disposed in front of a first base point and located in front of a front transverse beam of the front-row seats of the frame, and the first base point is an orthographic projection of hips of a front-row passenger in a sitting posture on the bottom shell. The second set of transverse beam assemblies can be configured to bear a stepping force from a front-row passenger or driver. The third set of transverse beam assemblies is disposed between a second base point and a rear transverse beam of the front-row seats of the frame, and the second base point is an orthographic projection of hips of a rear-row passenger in a sitting posture on the bottom shell. The third set of transverse beam assemblies can be configured to bear a stepping force from a rear-row passenger.

Specifically, a distance between the second set of transverse beam assemblies and the first base point is 600±100 mm, and a distance between the third set of transverse beam assemblies and the second base point is 600±150 mm.

In a possible implementation, in the length direction of the electric vehicle, a size of a transverse beam bracket in the first set of transverse beam assemblies is greater than a size of a transverse beam bracket in the second set of transverse beam assemblies, to meet requirements for support forces at different positions.

In a possible implementation, in the length direction of the electric vehicle, the third set of transverse beam assemblies includes a plurality of transverse beam assemblies, and the plurality of transverse beam assemblies are arranged adjacently in the length direction of the electric vehicle, to increase support strength.

According to a third aspect, an electric vehicle is provided. The electric vehicle includes any cell-integrated vehicle body provided according to the first aspect. Because the cell-integrated vehicle body has high integration and strength, where the upper cover of the battery pack box is used as a part of the bottom plate of the frame, sufficient stepping stiffness can be ensured, and requirements for sealing and safety of the battery pack can also be met. For the entire electric vehicle, vertical sitting space in the vehicle also increases, improving sitting experience and comfort of passengers.

For technical effects that can be achieved according to the second aspect and the third aspect, refer to the descriptions of the technical effects that can be achieved according to corresponding design schemes in the first aspect. Details are not described herein again in this application.

### BRIEF DESCRIPTION OF DRAWINGS

FIG. 1 is a diagram of a structure of an electric vehicle according to an embodiment of this application;
FIG. 2a is a diagram of a structure of a cell-integrated vehicle body according to an embodiment of this application;
FIG. 2b is a diagram of a structure of a frame of a cell-integrated vehicle body according to an embodiment of this application;
FIG. 3a is a diagram of a structure of a battery pack in a cell-integrated vehicle body according to an embodiment of this application;
FIG. 3b is a diagram of a structure of a battery pack without an upper cover in a cell-integrated vehicle body according to an embodiment of this application;
FIG. 4a is a diagram of a structure of a housing of a battery pack box according to an embodiment of this application;
FIG. 4b is a diagram of a structure of a housing of a battery pack box according to an embodiment of this application;
FIG. 5a is a diagram of a simplified structure of a housing of a battery pack box according to an embodiment of this application;
FIG. 5b is a diagram of a structure of a battery pack box and a frame that are fitted together according to an embodiment of this application;
FIG. 5c is a diagram of a scenario in which a battery pack box and a frame are fitted together according to an embodiment of this application;
FIG. 6 is a diagram of a connection structure of a transverse beam bracket in a battery pack box according to an embodiment of this application;
FIG. 7a is a diagram of a cross-sectional structure at V1-V1 in FIG. 6;
FIG. 7b is a diagram of fitting the structure shown in FIG. 7a and an upper cover together;
FIG. 8a is a diagram of a cross-sectional structure at V2-V2 in FIG. 6; and
FIG. 8b is a diagram of fitting the structure shown in FIG. 8a and an upper cover together.

### DESCRIPTION OF EMBODIMENTS

The cell-to-body technology is a technology to integrate cells into a vehicle body, in which an upper cover of a battery pack can be used as a floor of an entire vehicle, and a body in white of the vehicle has no sheet metal floor structure. In the conventional technology, a design idea for cell to body is to use an upper cover of a battery pack as a bottom plate for a body in white, where the body in white itself has no bottom plate. This cell-to-body technology is only applicable to blade batteries. This is because transverse and dense arrangement of blade batteries can well bear a force generated when a passenger steps on an upper cover of the batteries. In addition, electrode tabs are on two sides of the batteries. In this case, there is no failure, for example, a short circuit at a high voltage, when the upper cover of the batteries is under stepping pressure. Another design idea for cell to body is to use a bottom plate of a body in white as an upper cover for a battery pack, where the battery pack itself has no upper cover. The battery pack of this structure has an extremely high requirement for sealing and an extremely high requirement for a level of assembly and manufacturing with the vehicle body. In addition, the battery pack with no upper cover needs to be well dustproof and waterproof during transportation, resulting in high logistics costs. A prismatic battery is common in the field of new energy. An electrode tab of the battery usually faces a top or a bottom. When the cell-to-body technology is applied to the prismatic battery, it is necessary to focus on stepping stiffness of an upper cover of a battery pack while meeting a sealing requirement of the battery pack, to ensure safety of a high-voltage function.

Based on this, embodiments of this application provide a battery pack box, a cell-integrated vehicle body, and a vehicle. The battery pack box can ensure a sealing requirement of a battery, and an upper cover of a battery pack has sufficient strength. When the cell-to-body technology is applied to the upper cover of the battery pack, the upper cover of the battery pack can meet a requirement of a passenger for stepping stiffness.

To make the objectives, technical solutions, and advantages of this application clearer, the following further describes this application in detail with reference to the accompanying drawings.

Terms used in the following embodiments are merely intended to describe specific embodiments, but are not intended to limit this application. As used in this specification and the appended claims of this application, singular expression forms "one", "a", and "this" are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

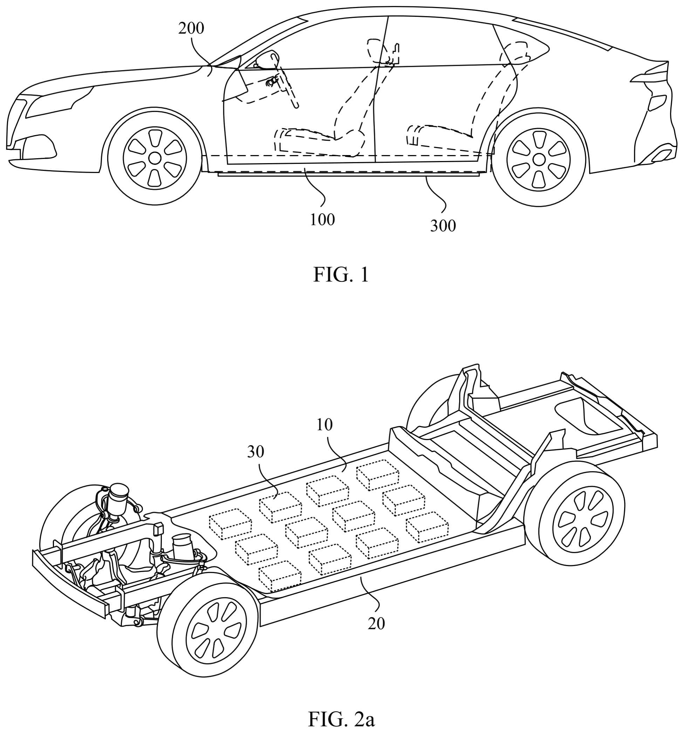

As shown in FIG. 1, an embodiment of this application provides an electric vehicle. The electric vehicle includes an upper vehicle body 200, a lower vehicle body 100, and cells 300. The upper vehicle body 200 and the lower vehicle body 100 are combined together to form an entire structure of the electric vehicle. The cells 300 may be directly integrated and mounted on the lower vehicle body 100, to implement cell-to-body integration. After the cell-to-body integration technology is applied to the electric vehicle, strength of the entire vehicle is increased, and rolling is also reduced when the vehicle corners at a high speed, so that maneuverability and driving safety of the electric vehicle can be improved.

FIG. 2a shows a cell-integrated vehicle body according to an embodiment of this application. The cell-integrated vehicle body may be used as the lower vehicle body 100 shown in FIG. 1. As shown in FIG. 2a, the cell-integrated vehicle body includes a frame 20, a battery pack box 10, and cells 30. The cells 30 are accommodated in the battery pack box 10, and are therefore shown by a dashed line. The integration of the frame 20 and the battery pack box 10 can increase overall strength of the frame. The deformation of a chassis and other components of the frame structure of the electric vehicle can be reduced under different road conditions. Based on the integration of the frame 20 and the battery pack box 10, a top portion of the battery pack box 10 can be used as a floor of the frame 20, freeing up space that is originally for a multi-layer structure between the battery pack and the floor, and improving volume utilization of a battery system, so that more batteries can be placed in the same space. Through the integration of the frame 20 and the battery pack box 10, some structures are omitted, so that a mass of the cell-integrated vehicle body can be reduced, and costs can also be reduced. In addition, for the entire electric vehicle, vertical sitting space in the vehicle also increases, improving sitting experience and comfort of passengers. The reduction of a height of the entire vehicle can also reduce wind resistance of the electric vehicle, improving performance of the electric vehicle. In some embodiments, through selection of an appropriate material and mechanism design, space for heads of a driver and a passenger can be saved by about 20 mm, and a weight of the entire vehicle can be reduced by about 4 kg to 7 kg, so that costs of the entire vehicle can be reduced by several hundred CNY or more.

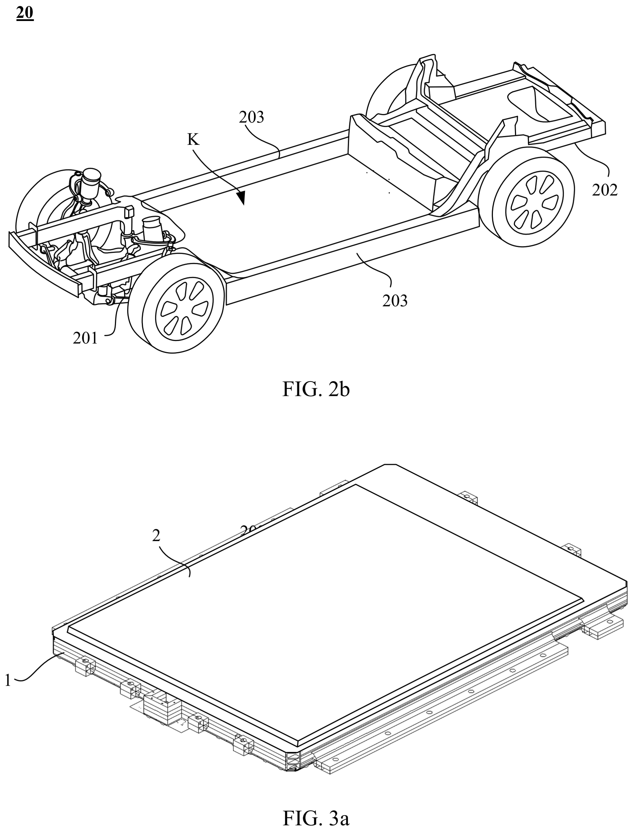

Further refer to the frame 20 shown in FIG. 2b. The frame 20 includes a front segment 201, a rear segment 202, and two threshold beams 203 connected between the front segment 201 and the rear segment 202. The two threshold beams 203 are opposite to each other and spaced apart. Mouth-shaped space K is enclosed and formed by the front segment 201, the rear segment 202, and the two threshold beams 203. When the frame 20 and the battery pack box 10 are fitted, the battery pack box 10 is welded to the front segment 201, the rear segment 202, and the two threshold beams 203, so that a top portion of the battery pack box 10 can be at least partially fitted to the mouth-shaped space K, and the top portion of the battery pack box 10 can be used as the floor of the frame 20.

FIG. 3a shows a battery pack according to an embodiment of this application. The battery pack may be considered as a structure obtained after the battery pack 30 and the battery pack box 10 are integrated. As shown in FIG. 3a, the battery pack box 10 includes a housing 1 and an upper cover 2, and the upper cover 2 is fastened to a top of the housing 1. When the battery pack box 10 and the frame 20 are integrated to form a cell-integrated vehicle body, the upper cover 2 is a floor of the cell-integrated vehicle body. The cells 30 are accommodated in the battery pack box 10 and are therefore not shown.

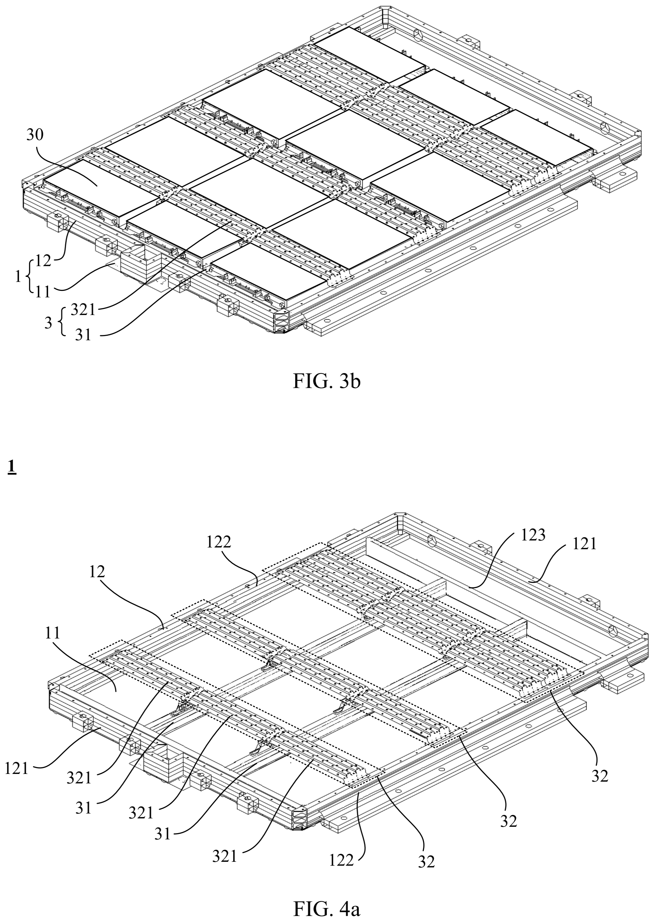

FIG. 3b shows a structure of the battery pack without the upper cover 2. As shown in FIG. 3b, the housing 1 includes a bottom shell 11, an enclosing frame 12, and a reinforcing structure 3. The enclosing frame 12 is fastened to the bottom shell 11 and protrudes from the bottom shell 11. For example, the bottom shell 11 is in a rectangular shape, the enclosing frame 12 is disposed along edges of the bottom shell 11, and a structure formed by combining the enclosing frame 12 and the bottom shell 11 is in a shape of an open case. The reinforcing structure 3 structure is fastened to the enclosing frame 12, and specifically includes at least one longitudinal beam 31 and a plurality of transverse beam brackets 321, where the transverse beam brackets 321 are arched. The longitudinal beam 31 extends in the length direction of the electric vehicle to provide support. The transverse beam brackets 321 extend in the width direction of the electric vehicle to provide support. Two ends of any one of the transverse beam brackets 321 are fastened to one longitudinal beam 31 and the enclosing frame 12, or are fastened to two adjacent longitudinal beams 31. The longitudinal beam 31 may divide space enclosed by the enclosing frame 12 into a plurality of cell accommodating recesses in the width direction of the electric vehicle, and the cells 30 may be accommodated in the cell accommodating recesses. The transverse beam 1321 can cross over the cell 30 in the width direction of the electric vehicle, and therefore can also protect the cell 30 while providing support. With the upper cover 2, the upper cover 2 can cover the top of the enclosing frame 12, and the upper cover 2 may be connected and fastened to the transverse beam brackets 321. The transverse beam brackets 321 provide sufficient strength and support for the upper cover 2. The upper cover 2 and the enclosing frame 12 may be fastened by welding and sealed, to well protect the cells accommodated in the battery pack box 10.

FIG. 4a shows a structure of the housing 1. With reference to the electric vehicle, it may be considered that the enclosing frame 12 of the housing 1 includes two first side shells 121 and two second side shells 122. The two first side shells 121 are opposite to each other in the length direction of the electric vehicle. The two second side shells 122 are opposite to each other in the width direction of the electric vehicle. One first side shell 121, one second side shell 122, the other first side shell 121, and the other second side shell 122 are sequentially connected from head to tail along the edges of the bottom shell 11 to form the enclosing frame 12. Some transverse beam brackets 321 are connected between one longitudinal beam 31 and a neighboring second side shell 122. The transverse beam brackets 321 are parallel to the width direction of the electric vehicle. When there are at least two longitudinal beams 31, at least one transverse beam bracket 321 is also connected between any two adjacent longitudinal beams 31. The enclosing frame 12 further includes an auxiliary side shell 123 located between the two first side shells 121. Two ends of the auxiliary side shell 123 are respectively connected to the two second side shells 122, and the auxiliary side shell 123 is parallel to the first side shell 121, that is, the auxiliary side shell 123 is parallel to the width direction of the electric vehicle. With reference to the length direction of the electric vehicle, the auxiliary side shell 123 is close to the first side shell 121 located at the rear of the vehicle. Two ends of each longitudinal beam 31 are respectively connected between the auxiliary side shell 123 and the first side shell 121 located at the front of the vehicle. There is specific space between the auxiliary side shell 123 and the first side shell 121, helping optimize a structural design of the housing 1 while ensuring strength of the housing 1.

Still refer to FIG. 4a. The longitudinal beam 31 can divide internal space of the enclosing frame 12 in the width direction of the electric vehicle into at least two regions for accommodating cells. The longitudinal beam 31 can provide connection and support functions in the length direction of the electric vehicle, so that force bearing in the length direction of the electric vehicle is continuous, making structural stability higher. Based on the longitudinal beam 31, the transverse beam bracket 321 is connected between two adjacent longitudinal beams 31 or between the longitudinal beam 31 and the second side shell 122, and can provide connection and support functions in the width direction of the electric vehicle. The transverse beam bracket 321 is arched and protrudes away from the bottom shell 11. The stressed transverse beam bracket 321 can transfer a force downward to the longitudinal beam 31 and the second side shell 122, to further bear greater pressure, thereby improving a load-bearing capability of the housing 1. In this case, the upper cover 2 has sufficient stepping stiffness, meeting a strength requirement of the floor of the frame.

In the structure of the housing 1 shown in FIG. 4a, the plurality of transverse beam brackets 321 are arranged according to a specific rule. For example, in the length direction of the electric vehicle, a plurality of transverse beam assemblies 32 may be disposed between the two first side shells 121. There may be a plurality of transverse beam assemblies 32, and the plurality of transverse beam assemblies 32 are spaced apart in the length direction of the electric vehicle. Each transverse beam assembly 32 includes a plurality of transverse beam brackets 321 sequentially arranged from head to tail in the width direction of the electric vehicle. One transverse beam bracket 321 is connected between one second side shell 122 and a neighboring longitudinal beam 31. Another transverse beam bracket 321 is connected between the other second side shell 122 and a neighboring longitudinal beam 31. When there are at least two longitudinal beams 31, one transverse beam bracket 321 is connected between any two adjacent longitudinal beams 31.

Two longitudinal beams 31 in FIG. 4a are used as an example. Each transverse beam assembly 32 includes three transverse beam brackets 321. A first transverse beam bracket 321 is connected between one second side shell 122 and one longitudinal beam 31, a second transverse beam bracket 321 is connected between the two longitudinal beams 31, and a third transverse beam bracket 321 is connected between the other second side shell 122 and the other longitudinal beam 31. The plurality of transverse beam brackets 321 in each transverse beam assembly 32 are arranged in the width direction of the electric vehicle, so that the plurality of transverse beam brackets 321 in the transverse beam assembly 32 can form a continuous force-bearing structure extending in the width direction of the electric vehicle, further improving stepping stiffness of the upper cover 2. Certainly, the plurality of transverse beam brackets 321 may alternatively be disposed irregularly.

The longitudinal beam 31 and the two second side shells 122 receive forces in the length direction of the electric vehicle. For uniform force bearing, the two second side shells 122 and all the longitudinal beams 31 may be evenly disposed in the width direction of the electric vehicle, so that forces on the upper cover 2 in the length direction of the electric vehicle can be evenly distributed in the width direction of the electric vehicle. Specifically, in the width direction of the electric vehicle, a size between each second side shell 122 and a neighboring longitudinal beam 31 is the same, and therefore a size of each transverse beam bracket 321 is equal in the width direction of the electric vehicle. When there are at least two longitudinal beams 31, a size between each second side shell 122 and a neighboring longitudinal beam 31 is the same as a size between any two adjacent longitudinal beams 31.

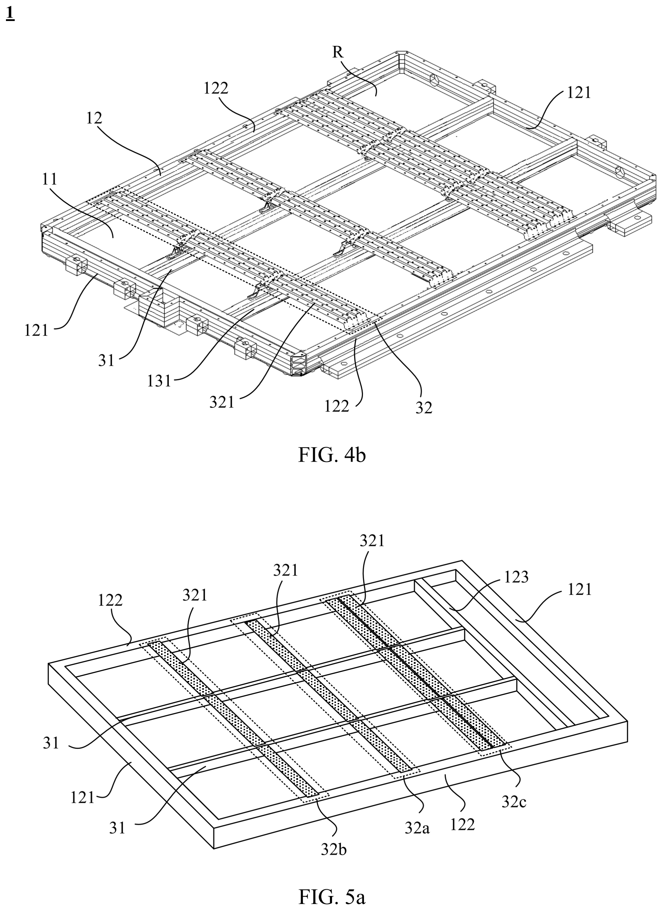

FIG. 4b shows another structure of the housing 1. The longitudinal beam 31 is disposed in the length direction of the electric vehicle, and two ends of the longitudinal beam 31 are fastened to the two first side shells 121. In this structure, forces on the longitudinal beam 31 between the two first side shells 121 are continuous on the entire housing 1, making strength higher.

In a specific implementation, FIG. 5a shows a simplified structure of the housing 1 shown in FIG. 4a. In the length direction of the electric vehicle, the battery pack box 10 is provided with a plurality of transverse beam assemblies 32, and the plurality of transverse beam assemblies 32 are grouped into three sets. Each set of transverse beam assemblies 32 includes one transverse beam assembly 32. The three sets of transverse beam assemblies 32 are spaced apart in the length direction of the electric vehicle. The three sets of transverse beam assemblies 32 are respectively a first set of transverse beam assemblies 32a, a second set of transverse beam assemblies 32b, and a third set of transverse beam assemblies 32c. From the front to the rear of the electric vehicle, the first set of transverse beam assemblies 32a is located between the second set of transverse beam assemblies 32b and the third set of transverse beam assemblies 32c.

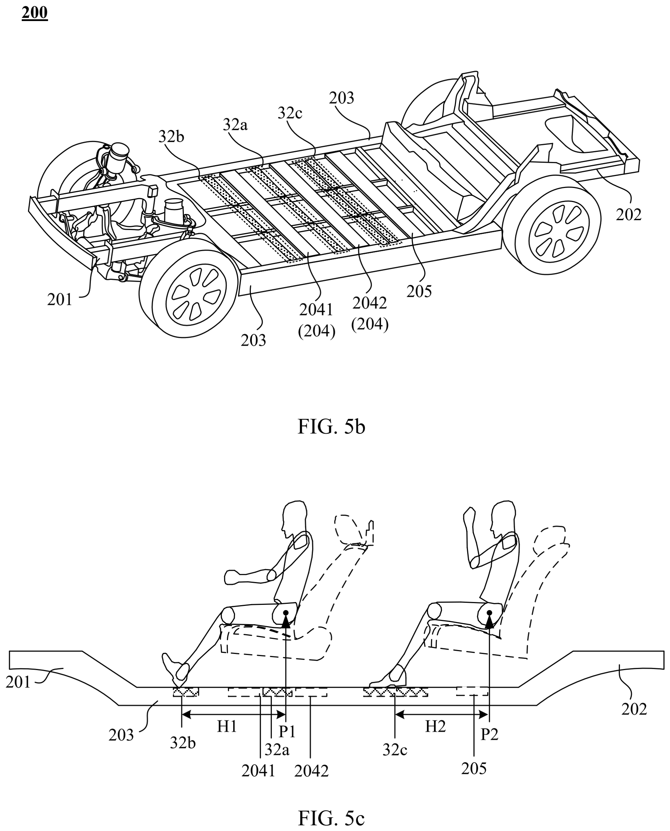

Further, as shown in FIG. 5b, with reference to the frame 20 of the electric vehicle, the frame 20 includes two front-row transverse beams 204 of front-row seats, which are respectively a front first transverse beam 2041 and a second transverse beam 2042. The first transverse beam 2041 and the second transverse beam 2042 may be slidably disposed between the two threshold beams 203 in the length direction of the electric vehicle. In the length direction of the electric vehicle, the first transverse beam 2041 may be considered as a front front-row transverse beam 204 of the front-row seats, and the second transverse beam 2042 may be considered as a rear front-row transverse beam 204 of the front-row seats. The frame 20 of the electric vehicle further includes a rear-row transverse beam 205 of rear-row seats, and the rear-row transverse beam 205 is connected between the two threshold beams 203.

FIG. 5c is a diagram of a simulated force-bearing state of the cell-integrated vehicle body 100. The first set of transverse beam assemblies 32a in the foregoing three sets of transverse beam assemblies 32 is disposed between the two front-row transverse beams 204 of the front-row seats, that is, the first set of transverse beam assemblies 32a is located between the first transverse beam 2041 and the second transverse beam 2042. The first set of transverse beam assemblies 32a may be configured to bear pressure from a driver and a passenger in the front row on the floor of the electric vehicle. The second set of transverse beam assemblies 32b is disposed in front of a first base point P1 and located in front of the front front-row transverse beam 204 of the front-row seats of the frame 20, that is, the second set of transverse beam assemblies 32b is disposed in front of the first base point P1 and located in front of the first transverse beam 2041. In this case, the second set of transverse beam assemblies 32b is configured to bear pressure from a driver and a passenger in the front row stepping on the floor of the electric vehicle. The first base point P1 is a position, in the length direction of the electric vehicle, of an orthographic projection of hips of a driver or a passenger in the front row in a sitting posture on the bottom shell 1. Specifically, a distance H1 between the second set of transverse beam assemblies 32b and the first base point P1 is 600±100 mm. The third set of transverse beam assemblies 32c is disposed between a second base point P2 and the rear front-row transverse beam 204 of the front-row seats of the frame 20, that is, the third set of transverse beam assemblies 32c is disposed between the second base point P2 and the front-row transverse beam 204b. In this case, the third set of transverse beam assemblies 32c is configured to bear pressure from a rear-row passenger stepping on the floor of the electric vehicle. The second base point P2 is a position, in the length direction of the electric vehicle, of an orthographic projection of hips of a vehicle shell in the rear row in a sitting posture on the bottom shell 1. Specifically, a distance H2 between the third set of transverse beam assemblies 32c and the second base point P2 is 600±150 mm.

The arrangement of the transverse beam bracket 321 in each set of transverse beam assemblies 32 may also be adaptively modified in response to the arranged positions of the three sets of transverse beam assemblies 32. Refer to FIG. 5a to FIG. 5c together. For example, the first set of transverse beam assemblies 32a is provided with one transverse beam assembly 32, and the second set of transverse beam assemblies 32b is provided with one transverse beam assembly 32. Due to different forces on the first set of transverse beam assemblies 32a and the second set of transverse beam assemblies 32b, in the length direction of the electric vehicle, a size of the transverse beam bracket 321 in the first set of transverse beam assemblies 32a may be set to be greater than a size of the transverse beam bracket 321 in the second set of transverse beam assemblies 32b, so that a support force of the first set of transverse beam assemblies 32a is stronger than a support force of the second set of transverse beam assemblies 32b. Alternatively, the transverse beam bracket 321 in the first set of transverse beam assemblies 32a and the transverse beam bracket 321 in the second set of transverse beam assemblies 32b have same sizes, the first set of transverse beam assemblies 32a is provided with one transverse beam assembly 32, and the second set of transverse beam assemblies 32b is provided with two transverse beam assemblies 32. A support force of the third set of transverse beam assemblies 32b usually needs to be stronger than those of the first set of transverse beam assemblies 32a and the second set of transverse beam assemblies 32b. Therefore, the third set of transverse beam assemblies 32c is provided with at least two transverse beam assemblies 32, and the at least two transverse beam assemblies 32 are arranged adjacently in the length direction of the electric vehicle, to increase a support force.

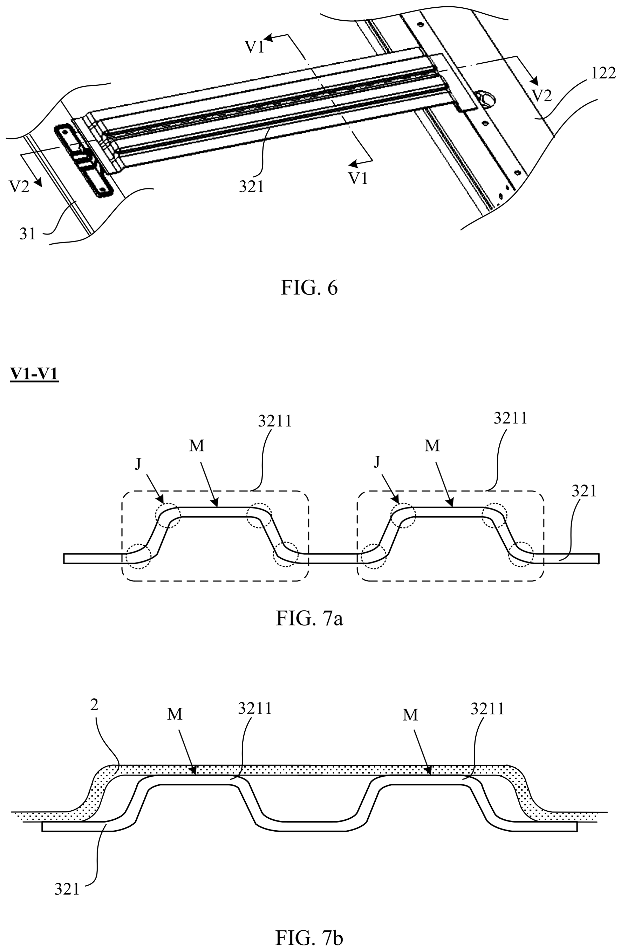

FIG. 6 is a diagram of a structure in which a transverse beam bracket 321 is connected to a second side shell 122 and a longitudinal beam 31. The second side shell 122 extends in the length direction of the electric vehicle. The transverse beam bracket 321 extends in the width direction of the electric vehicle.

FIG. 7a shows a cross-sectional structure of the transverse beam bracket 321 cut along the V1-V1 plane shown in FIG. 6. The cross-section is parallel to the length direction of the electric vehicle. As shown in FIG. 7a, in the length direction of the electric vehicle, that is, a direction perpendicular to an extension direction of the transverse beam bracket 321, the transverse beam bracket 321 includes at least one bent structure 3211, and the bent structure 3211 protrudes away from the bottom shell 11. Two ends of the transverse beam bracket 321 are respectively configured to be connected to the second side shell 122 and the longitudinal beam 31, and the bent structure 3211 protrudes away from the bottom shell 11, so that the transverse beam bracket 321 is arched. When the transverse beam bracket 321 receives a force, a protrusion part of the bent structure 3211 bears the external force and transfers the force through the transverse beam bracket 321 to the second side shell 122 and the longitudinal beam 31 at the ends, so that the transverse beam bracket 321 can bear a greater force. For the entire transverse beam bracket 321, in the presence of the bent structure 3211, a certain compressive stress and a certain tensile stress are formed inside the transverse beam bracket 321 when the transverse beam bracket 321 receives a force, so that the external force can be partially counteracted, thereby increasing strength.

As shown in FIG. 7a, the bent structure 3211 is approximately in a trapezoidal shape, four nodes J at bends are formed on each bent structure 3211, and the transverse beam bracket 321 is bent at the four nodes J to form the bent structure 3211. The bent two structure 1411 can transfer forces like an arch bridge, and can also implement structural reinforcement, further improving support effect of the transverse beam bracket 321.

During specific implementation, at least two bent structures 3211 are arranged in the length direction of the electric vehicle, so that at least two support surfaces M are formed on the transverse beam bracket 321 along the length of the electric vehicle, and the support surfaces M are coplanar, increasing a support force. The at least two bent structures 3211 are spaced apart, so that a plurality of nodes J at bends can be formed on the transverse beam bracket 321, further increasing a support force.

As shown in FIG. 7a, the transverse beam bracket 321 includes two bent structures 3211, and the two bent structures 3211 are spaced apart in the width direction of the electric vehicle. Each bent structure 3211 is in a shape of a protrusion that faces away from the bottom shell 11. A protrusion that faces the bottom shell 11 is formed between the two bent structures 3211. Due to the two bent structures 3211, eight nodes J at bends can be formed on the transverse beam bracket 321, further increasing a support force of the transverse beam bracket 321.

Specifically, as shown in FIG. 7a, the bent structure 3211 includes the support surface M parallel to the bottom shell 11, and the support surface M may be configured to receive forces.

As shown in FIG. 7b, when the upper cover 2 is fastened to the housing 1, a surface that is of the upper cover 2 and that faces the bottom shell 11 may be fastened to the support surface M of the bent structure 3211 by spot welding or riveting. A surface contact connection can be implemented between the support surface M and the upper cover 2, increasing a contact area and improving support effect. During the assembly of the battery pack box 10 provided in embodiments of this application, the upper cover 2 is first connected to the transverse beam bracket 321, and a connection process may be spot welding or riveting.

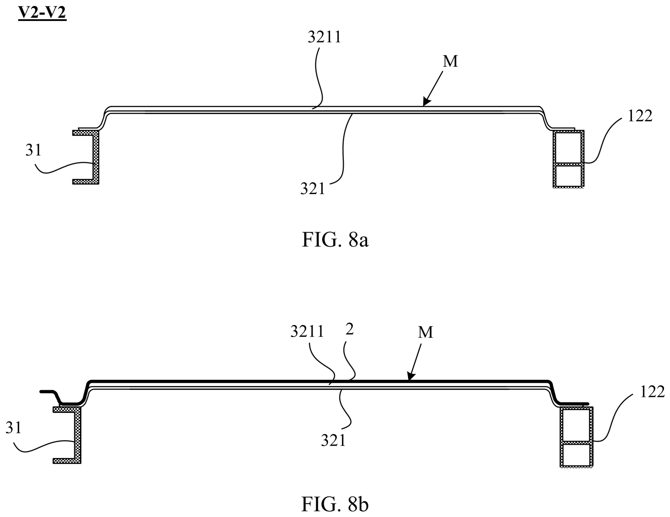

FIG. 8a shows a cross-sectional structure of the transverse beam bracket 321 cut along the V2-V2 plane shown in FIG. 6. The cross-section is perpendicular to the length direction of the electric vehicle. As shown in FIG. 8a, two ends of the transverse beam bracket 321 are respectively fastened to the longitudinal beam 31 and the second side shell 122. A cross-section of the longitudinal beam 31 is, for example, C-shaped. The eight cross-sections of the longitudinal beam 31 may alternatively be rectangular, T-shaped, I-shaped, H-shaped, or in another shape. The second side shell 122 is of a hollow frame structure, which can reduce the mass of the entire structure while ensuring sufficient strength.

With reference to the cross-section of the transverse beam bracket 321 shown in FIG. 7a, the V2-V2 plane shown in FIG. 8a passes through a concave portion between the two bent structures 3211. Therefore, one of the bent structures 3211 can be seen in the view shown in FIG. 8a. As shown in FIG. 8b, when the upper cover 2 is fastened to the housing 1, the upper cover 2 is in contact with and connected to the support surface M of the bent structure 3211.

In conclusion, in the cell-integrated vehicle body provided in embodiments of this application, the frame 20 and the battery pack box 10 are integrated together, and the upper cover 2 of the battery pack box 10 is used to form at least a part of the floor of the frame 20, so that some structures are omitted, implementing weight reduction of the vehicle. The housing 1 of the battery pack box 10 can provide sufficient support for the upper cover 2 through the reinforcement and support of the reinforcing structure 3, so that the upper cover 2 can maintain sufficient stepping stiffness, meeting a strength requirement of the frame. In addition, through the integration of the frame 20 and the battery pack box 10, space for heads of a driver and a passenger can be increased, improving competitiveness of the entire vehicle, and the height and wind resistance of the vehicle can also be reduced.

It is clear that a person skilled in the art may make various modifications and variations to this application without departing from the scope of this application. This application is intended to cover these modifications and variations of this application provided that they fall within the scope of the claims of this application and their equivalent technologies.

## Claims

1. A battery pack box (10), configured to be integrated into a frame (20) of an electric vehicle, wherein the battery pack box (10) comprises a housing (1), an upper cover (2), and a reinforcing structure (3);
the housing (1) comprises a bottom shell (11) and an enclosing frame (12), and the enclosing frame (12) is fastened to the bottom shell (11) and protrudes from the bottom shell (11) to form space for accommodating cells (30);
the reinforcing structure (3) comprises at least one longitudinal beam (31) and a plurality of transverse beam brackets (321); each longitudinal beam (31) is fastened to the enclosing frame (12) in a length direction of the electric vehicle; any one of the transverse beam brackets (321) is fastened between one longitudinal beam (31) and the enclosing frame (12) or between any two adjacent longitudinal beams (31) in a width direction of the electric vehicle; and in the width direction of the electric vehicle, the transverse beam brackets (321) are arched and protrude away from the bottom shell (11); and
the upper cover (2) is sealingly fastened on a top that is of the enclosing frame (12) and that faces away from the bottom shell (11), the upper cover (2) is fixedly connected to the transverse beam brackets (321), and the upper cover (2) is configured to form at least a part of a floor of the frame.

2. The battery pack box (10) according to claim 1, wherein in the length direction of the electric vehicle, the transverse beam bracket (321) comprises at least one bent structure (3211), and the bent structure (3211) protrudes away from the bottom shell (11).

3. The battery pack box (10) according to claim 2, wherein the bent structure (3211) comprises a support surface (M) parallel to the bottom shell, and the upper cover (2) is at least partially fastened to the support surface (M).

4. The battery pack box (10) according to claim 3, wherein in the length direction of the electric vehicle, at least two bent structures (3211) are spaced apart, and support surfaces (M) of the bent structures (3211) are coplanar.

5. The battery pack box (10) according to any one of claims 1 to 4, wherein the battery pack box (10) is provided with a plurality of transverse beam assemblies (32) in the length direction of the electric vehicle; and
the transverse beam assemblies (32) each comprise a plurality of transverse beam brackets (321), and the plurality of transverse beam brackets (321) are sequentially arranged from head to tail in the width direction of the electric vehicle.

6. The battery pack box (10) according to any one of claims 1 to 5, wherein all the transverse beam brackets (321) have a same size in the width direction of the electric vehicle.

7. A cell-integrated vehicle body, comprising a frame (20), cells (30), and the battery pack box (10) according to any one of claims 1 to 6, wherein
the frame (20) comprises a front segment (201), a rear segment (202), and two threshold beams (203) connected between the front segment (201) and the rear segment (202); the front segment (201) and the rear segment (202) are fastened respectively at two ends of the enclosing frame (12) in the length direction of the electric vehicle, and the two threshold beams (203) are fastened respectively at two ends of the enclosing frame (12) in the width direction of the electric vehicle; and the upper cover (2) forms at least a part of a floor of the frame (20), and the cells (30) are accommodated between the housing (1) and the upper cover (2).

8. The cell-integrated vehicle body according to claim 7, wherein the battery pack box (10) is provided with a plurality of transverse beam assemblies (32) in the length direction of the electric vehicle; and
the transverse beam assemblies (32) each comprise a plurality of transverse beam brackets (321), and the plurality of transverse beam brackets (321) are sequentially arranged from head to tail in the width direction of the electric vehicle.

9. The cell-integrated vehicle body according to claim 8, wherein in the length direction of the electric vehicle, the plurality of transverse beam assemblies (32) are grouped into three sets, each set of transverse beam assemblies (32) comprises at least one transverse beam assembly (32), and the three sets of transverse beam assemblies (32) are spaced apart in the length direction of the electric vehicle; the three sets of transverse beam assemblies (32) comprise a first set of transverse beam assemblies (32a), a second set of transverse beam assemblies (32b), and a third set of transverse beam assemblies (32c);
the first set of transverse beam assemblies (32a) is disposed between two front-row transverse beams (204) of front-row seats of the frame;
the second set of transverse beam assemblies (32b) is disposed in front of a first base point (P1) and located in front of a front front-row transverse beam (204) of the front-row seats of the frame (20), and the first base point (P1) is an orthographic projection of hips of a front-row passenger in a sitting posture on the bottom shell (11); and
the third set of transverse beam assemblies (32c) is disposed between a second base point (P2) and a rear front-row transverse beam (204) of the front-row seats of the frame, and the second base point (P2) is an orthographic projection of hips of a rear-row passenger in a sitting posture on the bottom shell (11).

10. The cell-integrated vehicle body according to claim 9, wherein in the length direction of the electric vehicle, a size of a transverse beam bracket (321) in the first set of transverse beam assemblies (32a) is greater than a size of a transverse beam bracket (321) in the second set of transverse beam assemblies (32b).

11. The cell-integrated vehicle body according to claim 9 or 10, wherein in the length direction of the electric vehicle, the third set of transverse beam assemblies (32c) comprises a plurality of transverse beam assemblies (32), and the plurality of transverse beam assemblies (32) are arranged adjacently in the length direction of the electric vehicle.

12. An electric vehicle, comprising the cell-integrated vehicle body according to any one of claims 7 to 11.
